# EUROPEAN PATENT SPECIFICATION

(11) **EP 3 382 122 B1**
(45) Date of publication and mention of the grant of the patent: **29.06.2022**
(21) Application number: 18164366.9
(22) Date of filing: 27.03.2018
(51) Int. Cl.: E04D 13/03, E04D 15/00, B25H 7/00, B25H 7/04, E04F 21/00

(54) **METHOD FOR PROVIDING AN OPENING IN AN INNER WALL OF A BUILDING STRUCTURE AND MARKING TOOL FOR USE IN SUCH METHOD**
VERFAHREN ZUR HERSTELLUNG EINER ÖFFNUNG IN EINER INNENWAND EINER BAUSTRUKTUR UND MARKIERUNGSWERKZEUG ZUR VERWENDUNG IN EINEM SOLCHEN VERFAHREN
MÉTHODE POUR RÉALISER UNE OUVERTURE DANS UNE PAROI INTÉRIEURE D'UNE STRUCTURE DE BÂTIMENT ET OUTIL DE MARQUAGE UTILISÉ DANS CETTE MÉTHODE

(30) Priority: 27.03.2017 DK PA201770217
(43) Date of publication of application: 03.10.2018
(73) Proprietor: VKR Holding A/S, 2970 Hørsholm (DK)
(72) Inventor: WIIG, Martin Schwartz, 8260 Viby (DK)
(74) Representative: AWA Denmark A/S

(56) References cited:
- EP-A1- 2 860 487
- DE-U1- 9 415 685
- DE-U1-202005 000 227
- US-B1- 6 543 144

## Description

### Technical Field

The present invention relates to a method for providing an opening in an inner wall of a building structure for an interior lining for connection to a window frame of a roof window . The invention furthermore relates to a tool for use in the method.

### Background Art

When mounting a window in an inner wall of a building, an opening is cut in the inner wall. The size and shape of the opening should substantially match the size and shape of the intended window, including its inner lining. To avoid that the opening is larger than the dimensions of the window, a substantially smaller opening is made in the inner wall at the intended centre of the window, which is then expanded to match the opening of the window. This method is time consuming and the trail-and-error nature of the procedure makes it susceptible to installation errors.

When making the opening in the inner wall, the piercing of the wall can occur in an angle that is perpendicular to the inner wall. For such a piercing a right-angle protractor may be used as an auxiliary tool. Alternatively, it might be desirable to perform the piercing in an angle different to the perpendicular direction of the inner wall. This might be desirable to allow for more natural light to enter through the opening. A protractor with variable angle measurement can be used as an auxiliary tool for such a piercing. Also a carpenter's level is useful as an auxiliary tool for such piercing.

Piercing at an angle different from perpendicular could be utilized to make an opening that is that is vertical, for instance in horizontal roofs or roofs that slope at a small angle relative to horizontal.

Applicant's European patent application EP 2 860 487 A1 discloses a measuring tool, which can be used for the expansion of the initial opening and in order to provide a set of lining panels forming the transition from the window to the inner wall, but the initial opening is cut on the basis of an estimate of the windows position. As the opening has been cut, the measuring tool can be introduced into the opening. The measuring tool can be set to measure out different instances of fixed angles.

The utility model DE 20 2005 000 227 U1 discloses another measuring aid for expanding an initial opening, comprising two arms pivotally connected, whereby one pivoting arm in use is placed in a window groove and the second arm, which comprises spirit levels indication horizontal and vertical, respectively, is positioned horizontally or vertically and in contact with an edge of the initial opening. The distance from a fix point of the first arm to a rear edge of a cross-direction window groove is then measured and the measure is transferred to the inner wall as indication of a corner of the intended opening to be made.

A multipurpose tool is shown and described in US 6 543 144, which is meant for use by woodworkers or the like and which includes a body portion having end walls and first and second pairs of opposed side walls, with a plurality of level indicating means, at least one magnet recessed in the body portion, and a recess formed in one end of the body portion and extending between the first pair of opposed side walls, and a protractor arm having a longitudinally extending slot mounted in the recess.

Even though the arrangements disclosed in these documents facilitate the mounting and to some extent reduce the risk of incorrect installation, there is still a need for facilitating and having a fail-safe measurement and subsequent installation of a window.

### Summary of Invention

With this background it is therefore an object of the invention to provide facilitated overall installation conditions when installing a window in a roof surface.

In a first aspect, this and further objects are met by a method according to claim 1.

In a second aspect, a marking tool for use in the method is provided, having the features of claim 2.

By having a marking tool configured to mark an accurate position of an intended cutting location, the risk of erroneous installation is reduced and the installation procedure is facilitated. This is in particular achieved in that the marker is able to indicate a precise intended cutting location. Furthermore, by having the marker indicating the intended cutting location at all times during the installation procedure, the installation is facilitated because no further action is required to re-locate the cutting location. As the marking tool is removably attached to the frame when mounted, the installer has both hands free to perform other actions.

The at least one leg of the window engaging member of the marking tool is configured to be introduced in a groove in the window frame of the roof window, and the removable attachment is provided by frictional engagement between the at least one leg and the groove in the mounted condition of the marking tool.

By having the at least one leg of the window engaging member of the marking tool introduced in a groove of the window frame, the marking tool may be stable under the installation of the window, by having the groove keeping the marking tool in the same position.

According to the invention, the frictional engagement is provided by means of one or more elastic tongues on the at least one leg of the window engaging member to increase the retention of the marking tool to the roof window in the mounted condition.

At least some of said elastic tongue or elastic tongues may optionally be provided with a protrusion. By having the elastic tongues pressing against the sides in the groove of the window frame, whereby the force needed to release the marking tool from the groove is increased, the retention of the marking tool to the window may be increased.

In some embodiments the window engaging member may be provided with two legs, forming a right angle to each other. By having two legs, forming a right angle to each other, the window engaging member may be introduced in a groove at the corner of the window frame. The legs may follow the right angle of the corner of the window frame. By having two legs in frictional engagement with the groove, the retention of the marking tool to the window may be increased and the marking tool may be further stabilized.

In some embodiments the at least one leg may be provided with an inner, narrow section comprising the first surface, an opposite outer, wide section, and an intermediate, inclined section. By having an inner, narrow section and an intermediate, inclined section, the introduction of the at least one leg in the groove may be facilitated. The inner, narrow section, the opposite outer, wide section, and the intermediate, inclined section may also provide increased surface contact between the at least one leg and the groove, whereby the retention may be increased.

In some embodiments the angle indicating means may be provided as a separate element received in a recess provided within an upstanding wall to a main portion of the marker holder member. The angle indicating means may thereby be attached and detached from the marking tool. For example, the angle indicating means may be detached and used independently to measure or verify an angle. The recess provided in the marker holder member may be configured to receive any kind of angle indicating means.

Other presently preferred embodiments and further advantages will be apparent from the following detailed description and the dependent claims.

### Brief Description of Drawings

The invention will now be described in more detail below by means of non-limiting examples of embodiments and with reference to the schematic drawing, in which
Fig. 1 is a schematic view of an installation according to prior art of a roof window;
Fig. 2 is a schematic view of another installation according to prior art of a roof window;
Fig. 3 is a perspective front view of an embodiment of a marking tool according to the invention;
Fig. 4 is another perspective front view of the marking tool of Fig. 3;
Fig. 5 is an exploded view of the marking tool of Fig. 3;
Fig. 6 is a perspective rear view of the marking tool of Fig. 3;
Fig. 7 is a perspective view of the marking tool of Fig. 3 mounted on a roof window;
Fig. 8 is a side view of the roof window of Fig. 7 in a step during preparation of the installation;
Fig. 9 is a perspective view similar to Fig. 3 showing another embodiment of a marking tool of the invention; and
Fig. 10 is a side view of a third embodiment of a marking tool according to the invention.

### Description of Embodiments

In the following, embodiments of the first and the second aspects will be described in further detail. The window will be referred to as a roof window, installed in an inclined roof surface. Directional terms such as "upper", "lower" etc. relate to the position shown in the drawings. The invention is applicable to all types of windows for installation in all types of roofs, including flat roofs, and facades, however.

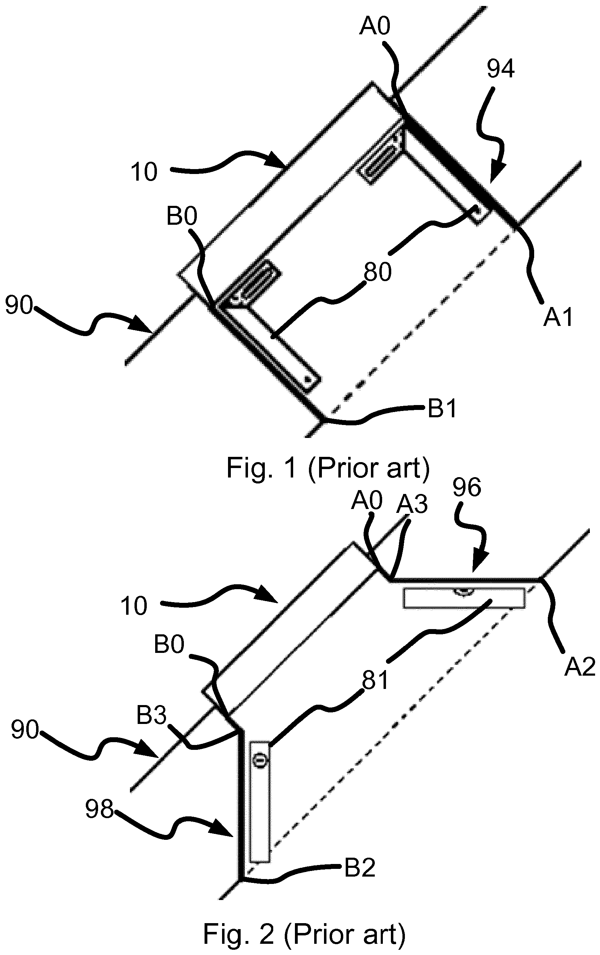

Referring to Figs. 1 and 2, when a roof window 10 is installed in e.g. an existing inclined roof 90 in an opening extending through the entire thickness of the roof structure, including any insulation 99 and inner wall 95 must be cut. The surfaces thus cut are covered by an interior lining composed by lining panels extending from a frame of the window 10 to the inner wall 95. The opening cut in the inner wall 95 should match the intended outline and shape of the interior lining 94. Usually the interior lining is intended to extend at e.g. right angles from side parts of the window 10, or at different angles from a top part and a bottom part of the window 10.

When making the opening in the inner wall 95, the piercing of the wall can occur in an angle that is perpendicular to the inner wall, as shown in Fig. 1. For such a piercing a right-angle protractor may be used as an auxiliary tool.

Alternatively, it might be desirable to perform the piercing in an angle different to the perpendicular direction of the inner wall. This might be desirable to allow for more natural light to enter through the opening. Fig. 2 shows the inner wall pierced in an angle different from orthogonal to the inner wall, such an angle can be chosen to suit the requirements of the user. A protractor with variable angle measurement can be used as an auxiliary tool for such a piercing. Also a carpenter's level is useful as an auxiliary tool for such piercing.

Fig. 1 shows an example of such a roof window 10, in which the interior lining 94 extends at right angles from an upper frame location point A0 at the top part and from a lower frame location point B0 at the bottom part of the window 10, respectively, the upper and lower interior linings 94 being substantially identical and composed by substantially rectangular lining panels. In turn, the lower and upper lining panels are interconnected by two side lining panels to provide an interior lining substantially shaped as a rectangular prism. To provide an opening in the inner wall 94 corresponding to such an interior lining a right-angle protractor 80 is a suitable auxiliary tool to mark upper inner wall location points A1 and B1, respectively.

Fig. 2 shows an example of the roof window 10 having an interior lining composed by an upper interior lining 96 and a lower interior lining 98. The upper interior lining 96 has a minor lining panel adjacent the roof window 10 extending from the upper frame location point A0 to an upper intermediate location point A3, substantially perpendicularly to the plane of the frame of the roof window 10, and a main lining panel extending horizontally from the upper intermediate location point A3 to an upper inner wall location point A2 at the top of the window 10. Correspondingly, the lower interior lining 98 has a minor lining panel extending substantially at right angles to the plane of the frame of the roof window 10 from the lower frame location point B0 to a lower intermediate location point B3, and an adjoining main lining panel extending substantially vertically from the lower intermediate location point B3 to a lower inner wall location point B2 at the bottom of the window. In general, a carpenter's level 81 is useful as an auxiliary tool for providing cut-out to match the horizontal and vertical parts, or the measuring tool of Applicant's above-mentioned European patent application EP 2 860 487 A1 may be used to assist in providing the proper cutting lines.

Not shown prior art installations include such where the upper interior lining extends horizontally directly from upper frame location point A0 to a location point at the inner wall, and the lower interior lining substantially vertically directly from lower frame location point B0 to a location point at the inner wall, thus resulting in an interior lining having the shape of a rectangular pyramid frustum, and interior linings extending at arbitrary angles to the plane of the window and to horizontal / vertical.

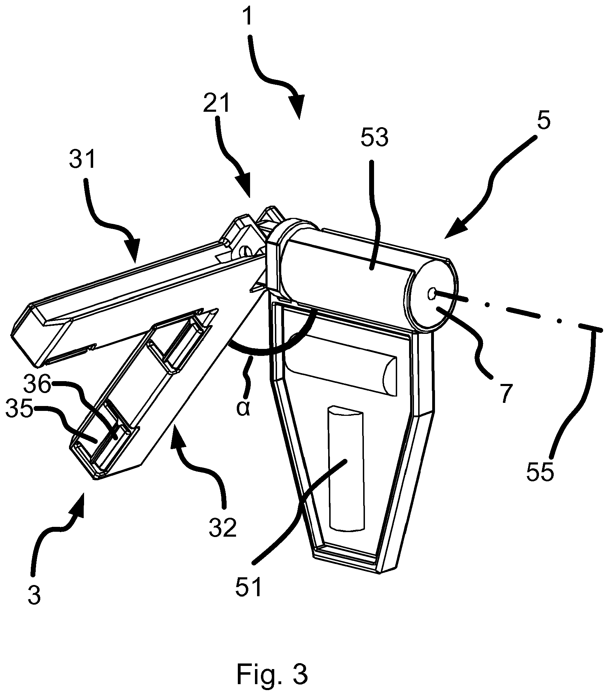

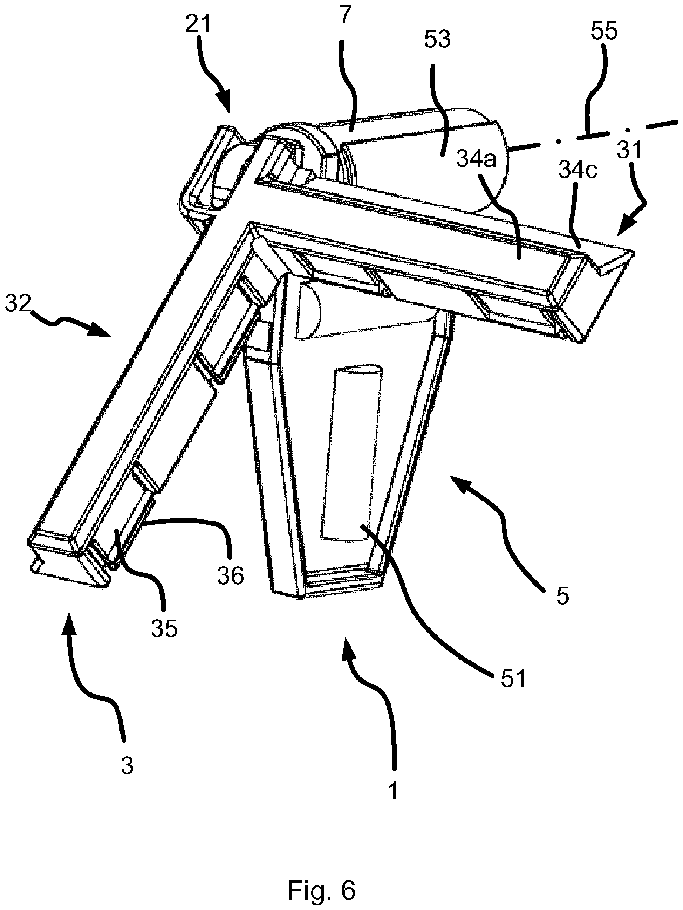

Figs. 3 to 6 show a first embodiment of a marking tool 1 according to the invention, which is configured to provide at least one inner wall location point at an arbitrary angle to the plane of frame of the roof window as will be described in further detail below. In the embodiment shown, the marking tool 1 also provides for the possibility of indicating cutting marks horizontally and vertically of the frame location points A0 and B0. During this operation, the marking tool 1 is configured to be able to assume a mounted condition, in which it is removably attached to the roof window 10. In this mounted condition, the marking tool 1 is configured to provide a cutting mark on the inner wall 94 during installation of the roof window 10 for a corresponding corner of an interior lining. That is, by the inventive marking tool 1, it is possible to obtain a plurality of inner wall location points.

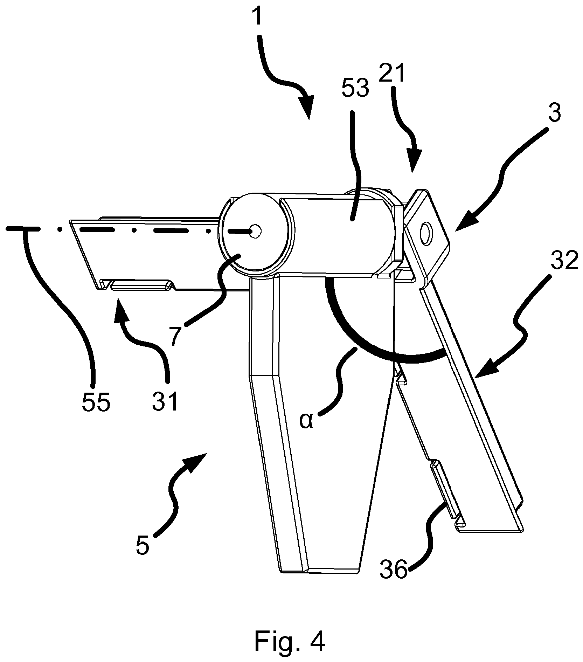

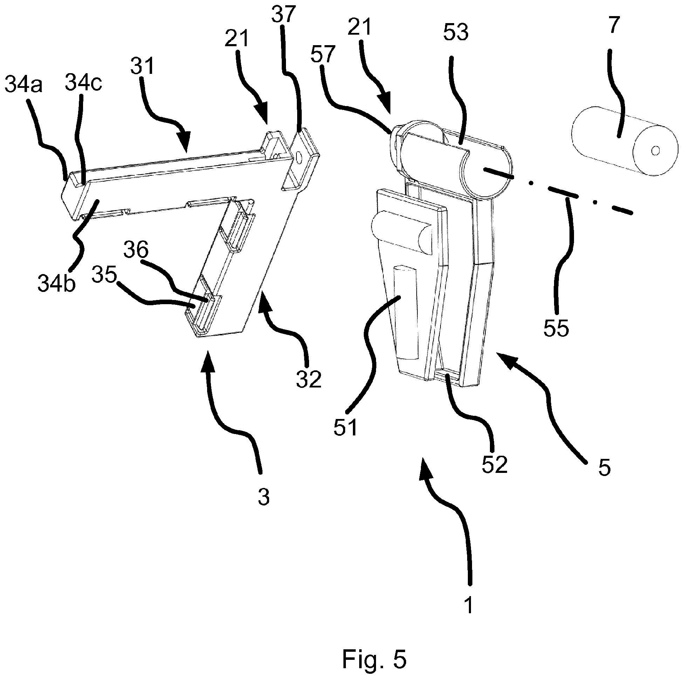

Thus as shown in Figs. 3 to 6 the marking tool 1 in the embodiment shown comprises a window engaging member 3, a marker holder member 5 and a marker 7. The window engaging member 3 has a first leg 31 and a second leg 32 perpendicular to the first leg 31, each leg comprising a first surface for abutment against a window and elastic tongues 35 with protrusions 36 for removably attaching the marker holder member 5 to the window by frictional engagement. The first and second legs 31, 32 are provided with an inner, narrow section 34a comprising the first surface, an opposite outer, wide section 34b, and an intermediate, inclined section 34c. The marker holder member 5 is pivotally connected to the window engaging member 3 through a pivotal connection 21 such as a hinge. The window engaging member 3 comprises a gable portion 37 forming part of the pivotal connection 21 to the marker holder member 5, and the gable portion 37 protrudes outside the outer perimeter of the first and second legs 31, 32. The marker holder member 5 comprises a tab portion 57 configured to be received in the gable portion 37 of the window engaging member 3 to form part of the pivotal connection 21, as can be seen on Fig. 3 and Fig. 4. The marker holder member 5 comprises an angle indicating means 51 and a marker locking mechanism 53, the marker 7 is mounted in the marker locking mechanism 53. As can be seen on Fig. 5 the angle indicating means 51 is provided as a separate element received in a recess 52.

The pivotal connection 21 between the window engaging member 3 and the marker holder member 5 allows for adjusting an angle of the marker holder member 5 such as an angle α between the first surface and a longitudinal axis 55 of the marker locking mechanism 53. The angle indicating means 51 can be employed to determine such angle of the marker holder member 5. In the present embodiment the angle indicating means 51 are provided by a pair of bubble tubes for indicating, respectively, a horizontal and a vertical position of the marker holder member 5 represented by the longitudinal axis 55. Thus in the present embodiment the angle of the marker holder member 5 indicated by the angle indicating means 51 is: zero compared to horizontal or vertical; above zero compared to horizontal or vertical; or below zero compared to horizontal or vertical.

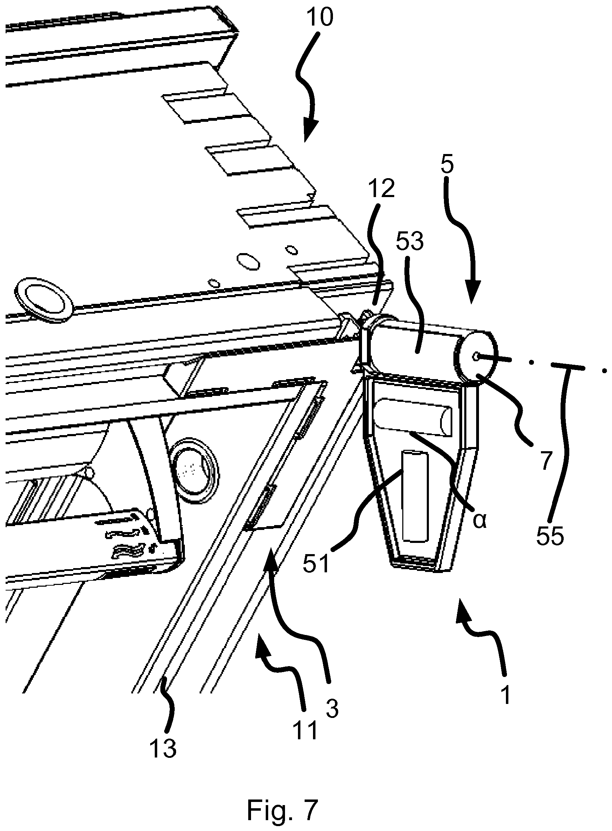

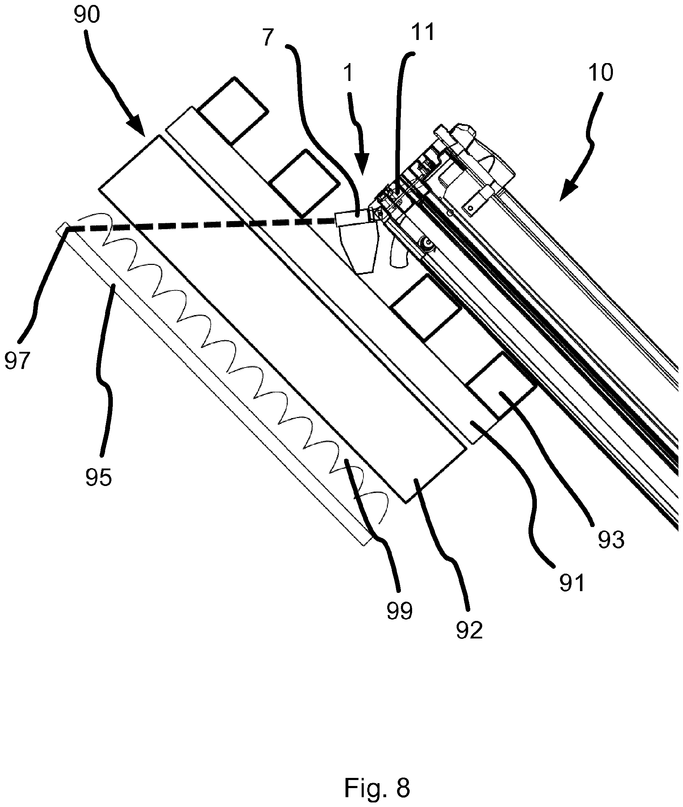

In Fig. 7 the marking tool 1 is shown attached to the window 10 at an upper corner of a window frame 11 of said window 10. The window engaging member 3 is inserted in a groove 13 in the window frame 11 intended for receiving the interior lining 94 (not shown), whereby the first surface of the window engaging member 3 is abutting the bottom of the groove 13. The inner, narrow section 34a comprising the first surface is abutting the bottom of the groove 13, and the intermediate, inclined section 34c is abutting an edge of the groove 13. The angle indicating means 51 displays the angle between the longitudinal axis 55 of the locking mechanism 53 and horizontal. A marker 7, which in the present embodiment is a laser pointer, is locked in the marker locking mechanism 53. The marker holder member 5 may abut a corner shoulder 12 of the window frame 11 when the angle of the marker holder member 5 is varied. In preparation of the installation of the window, a suitable location in the roof is first found. Fig. 8 shows the window 10 during the installation preparations, as the window frame 11 is positioned at an uncovered portion of an exterior of the roof 90. The marking tool 1 is attached, as shown in Fig. 7, to the window 10 at the corner of the window frame 11. In this preparatory position of the window frame 11, an interior side of the window frame 11 is flush with an external side of parallel battens 93. Fig. 8 further indicates counter battens 91 and rafters 92. It should be understood that the window 10 is positioned between adjacent rafters 92 with overlaying counter battens 91, and that the parallel battens 93 have been cut and the isolation 99 have been removed, to provide an opening for the window including its interior lining and to uncover a portion of the exterior of the inner wall 95 where the opening is intended to penetrate the inner wall. The marker 7 which is locked in the marker locking mechanism, indicates the intended cutting location 97 on the exterior of the inner wall 95. The angle indicating means 51 makes it possible to position the marker 7 to aim in a substantially horizontal direction.

It is noted that the marker holder member 5 is slightly off-set from the groove 13 and accordingly the intended cutting location 97 indicated by the marker 7 corresponds to an upper right corner of an interior lining extending perpendicular from the window frame 11 at a side thereof and horizontal from the window frame 11 at an upper part thereof.

It is understood that the marking tool 1 may correspondingly be used for marking a lower left corner of the interior lining extending perpendicular from the window frame 11 at a side thereof and vertically from the window frame 11 at a lower part thereof.

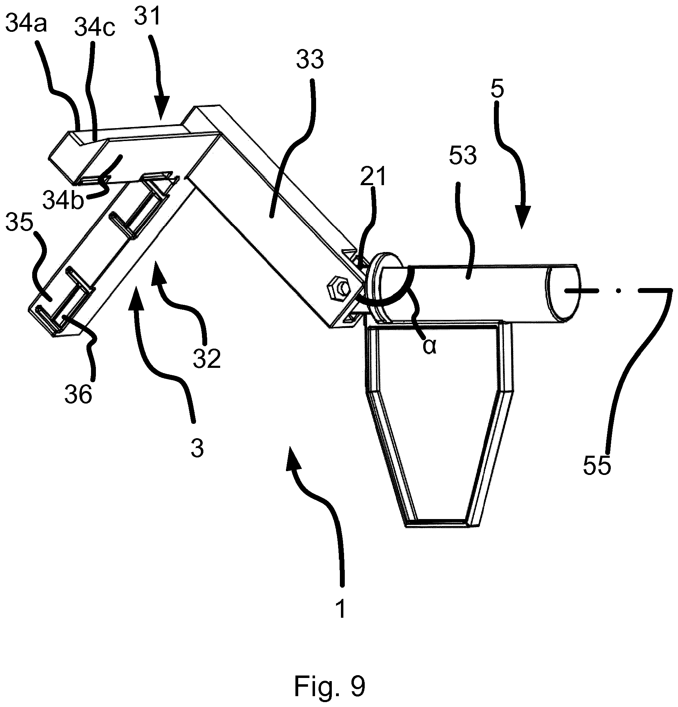

Fig. 9 shows a second embodiment of the marking tool 1. The window engaging member 3 comprises a first surface and an extended arm 33 at the angle where the first leg 31 and the second leg 32 meet. The first surface is adapted for engaging the window frame, where elastic tongues 35 are adapted for removable connection with a window frame as in the above first embodiment. The marker holder member 5 comprises a marker locking mechanism 53 having an axis 55 in the longitudinal direction of the marker locking mechanism.

The extended arm 33 extends from the first surface, where it is connected to the first and second legs 31, 32, to the pivotal connection 21, where it is pivotally connected to the marker holder member 5. In this manner, it is possible to accommodate the shape of a set of lining panels forming the transition between the window and the inner wall of the building in which the window is installed. Installation of such a lining is described in Applicant's above-mentioned published European patent application No. EP 2 860 487 A1, to which reference is explicitly made hereby.

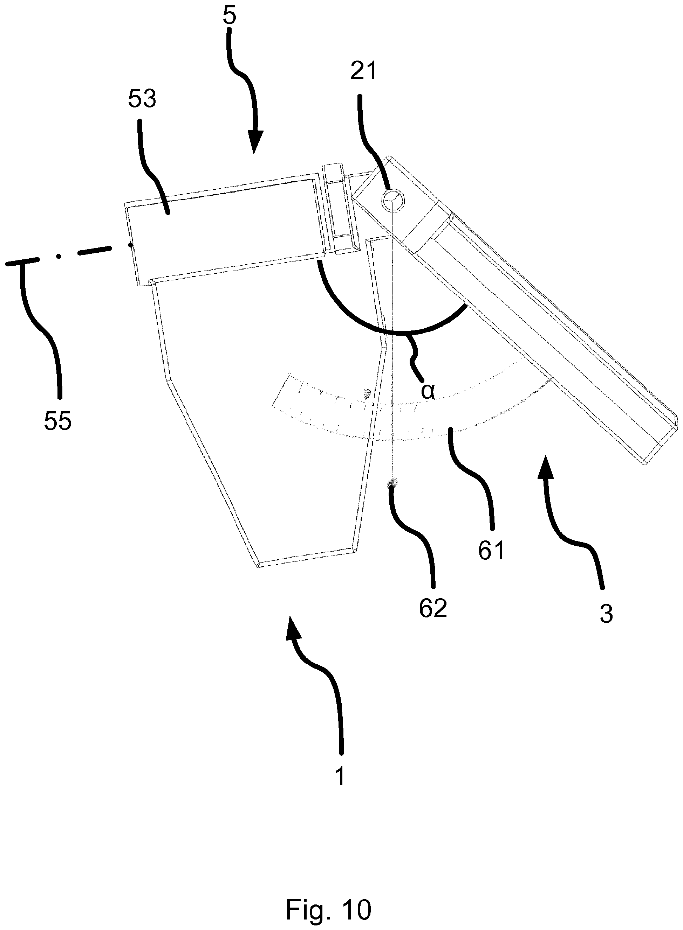

In Fig. 10, two alternative angle indicating means are shown, namely a protractor 61 and a plumb or a weight 62.

The invention should not be regarded as being limited to the described embodiments. Several modifications and combinations of the different embodiments will be apparent to the person skilled in the art, as defined in the appended claims.

### List of reference numerals

- 1: marking tool

- 3: window engaging member

- 31: first leg
- 32: second leg
- 33: extended arm
- 34a: inner, narrow section
- 34b: outer, wide section
- 34c: intermediate, inclined section
- 35: elastic tongue
- 36: protrusion
- 37: gable portion

- 5: marker holder member

- 51: angle indicating means
- 52: recess
- 53: marker locking mechanism
- 54: main portion
- 55: longitudinal axis
- 56: upstanding wall
- 57: tab portion

- 7: marker
- 8: apertures
- 9: header
- 10: roof window
- 11: window frame
- 12: corner shoulder
- 13: groove

- 21: pivotal connection

- 61: protractor
- 62: plumb

- 80: right-angle protractor
- 81: carpenter's level

- 90: inclined roof
- 91: counter batten
- 92: rafter
- 93: batten
- 94: interior lining (Fig. 1)

- 95: inner wall
- 96: upper interior lining (Fig. 2)
- 97: cutting location
- 98: lower interior lining (Fig. 2)
- 99: insulation

- α: angle

- A0: upper frame location point
- B0: lower frame location point
- A1: upper inner wall location point (Fig. 1)
- B1: lower inner wall location point (Fig. 1)
- A2: upper inner wall location point (Fig. 2)
- B2: lower inner wall location point (Fig. 2)
- A3: upper intermediate location point (Fig. 2)
- B3: lower intermediate location point (Fig. 2)

## Claims

1. A method for providing an opening in an inner wall of a building structure for an interior lining (94; 96, 98) for connection to a window frame (11) of a roof window (10), comprising the following sequence steps of:
preparing an uncovered portion of an exterior of the roof or wall substantially matching the dimensions of the window,
providing a marking tool (1) with
a window engaging member (3) having a first surface adapted for abutment with the window frame (11), and
a marker holder member (5) having angle indicating means (51) and a marker (7), the marker holder member (5) comprising a marker locking mechanism (53) with a longitudinal axis (55),
in which the window engaging member (3) and the marker holder member (5) are pivotally connected through a pivotal connection (21) allowing adjustment of an angle (a) between a plane defined by the first surface (31) of the window engaging member and the longitudinal axis (55) of the marker locking mechanism (53),
the angle indicating means (51) being configured to indicate the angle (a) of the axis of the marker locking mechanism (53) when the marking tool (1) is abutted against the window, and the marker (7) being configured to indicate an intended cutting location,
the window engaging member (3) of the marking tool (1) being provided with at least one leg (31) providing said first surface and configured to abut the window frame (11) in a mounted condition on the roof window (10), and
said at least one leg (31) of the window engaging member (3) being removably attachable to the window frame (11) in said mounted condition,
removably attaching the marking tool (1) against the window,
placing the window on the uncovered portion at the exterior of the roof or wall and the angle indicating means (51) being utilized to ensure that the marker holder member is at a predetermined angle,
marking an intended cutting location by means of the marker (7) and preparing an opening through the wall or roof at the intended cutting location.

2. A marking tool (1) for use in the method of claim 1, comprising:
a window engaging member (3) having a first surface adapted for abutment with the window frame (11), and
a marker holder member (5) having angle indicating means (51) and a marker (7), the marker holder member (5) comprising a marker locking mechanism (53) with a longitudinal axis (55),
in which the window engaging member (3) and the marker holder member (5) are pivotally connected through a pivotal connection (21) allowing adjustment of an angle (a) between a plane defined by the first surface (31) and the longitudinal axis (55) of the marker locking mechanism (53),
the angle indicating means (51) being configured to indicate the angle (a) of the axis of the marker locking mechanism (53) when the marking tool (1) is abutted against the window, and the marking device (7) being configured to indicate an intended cutting location,
in which the window engaging member (3) of the marking tool (1) is provided with at least one leg (31) providing said first surface and configured to abut the window frame (11) in a mounted condition on the roof window (10), and
said at least one leg (31) of the window engaging member (3) is removably attachable to the window frame (11) in said mounted condition, said at least one leg (31) of the window engaging member (3) of the marking tool (1) being configured to be introduced in a groove (13) in the window frame (11) of the roof window (10), and wherein the removable attachment is provided by frictional engagement between said at least one leg (31) and the groove (13) in the mounted condition of the marking tool (1),
**characterised in**
**that** the frictional engagement is provided by means of one or more elastic tongues (35) on said at least one leg (31) of the window engaging member (3) to increase the retention of the marking tool (1) to the roof window (10) in the mounted condition.

3. A marking tool according to claim 2, wherein at least some of said elastic tongue or elastic tongues (35) is/are provided with a protrusion (36).

4. A marking tool according to any one of claims 2-3, wherein the window engaging member (3) is provided with two legs (31, 32), forming a right angle to each other.

5. A marking tool according to any one of claims 2-4, wherein said at least one leg (31, 32) is provided with an inner, narrow section (34a) comprising the first surface, an opposite outer, wide section (34b), and an intermediate, inclined section (34c).

6. A marking tool according to any one of claims 2-5, wherein the maximum width of each said at least one leg (31, 32) is approximately 10 to 15 mm, preferably 12 to 13 mm.

7. A marking tool according to any one of claims 2-6, wherein the maximum thickness of each said at least one leg (31, 32) is approximately 7 to 13 mm, preferably 9 to 11 mm.

8. A marking tool according to any one of claims 2-7, wherein the window engaging member (3) comprises a gable portion (37) forming part of the pivotal connection (21) to the marker holder member (5), said gable portion (37) optionally protruding outside the outer perimeter of said at least one leg (31, 32).

9. A marking tool according to claim 8, wherein the marker holder member (5) comprises a tab portion (57) configured to be received in the gable portion (37) of the window engaging member (3) to form part of the pivotal connection (21).

10. A marking tool according to claim 4 and 8 or 9, wherein the pivotal connection (21) is located outside the intersection of the outer perimeters of the two legs (31, 32) of the window engaging member (3), preferably in the range 5 to 13 mm, more preferably in the range 7 to 11 mm.

11. A marking tool according to claim 2, wherein the angle indicating means (51) of the marker holder member (5) comprises a spirit level, a protractor (61) and/or means to install a plumb (62).

12. A marking tool according to claim 11, wherein the angle indicating means (51) is provided as a separate element received in a recess (52) provided within an upstanding wall (56) to a main portion (54) of the marker holder member (5).

13. A marking tool according to any one of claims 2-12, wherein the marker locking mechanism (53) is arranged as a snap-lock or a form-fitting locking mechanism or similar.

14. A marking tool according to any one of claims 2-13, wherein the marking device (7) is a pen, a piercing object, a laser pointer, a telescopic pointer or a drill.

15. A marking tool according to any one of claims 2-14, wherein the pivotal connection (21) between the window engaging member and the marker holder member is a hinge, a ball joint, an articulation or a swivel joint.

16. A marking tool according to any one of claims 2-15, wherein the window engaging member (3) of the marking tool (1) comprises an extending arm (33), which introduces a distance between the first surface (31) of the window engaging member (3) and the pivotal connection (21) between the window engaging member (3) and the marker holder member (5).

17. A marking tool according to claim 16, wherein the extending arm (33) is provided such that it extends at a right angle or an alternative angle to the first surface, where the angle may be fixed or variable.

## Patentansprüche

1. Verfahren zur Herstellung einer Öffnung in einer Innenwand einer Baustruktur für eine Innenauskleidung (94; 96, 98) zur Verbindung mit einem Fensterrahmen (11) eines Dachfensters (10), die folgende Schrittabfolge umfassend:
Vorbereiten eines unbedeckten Abschnitts eines Außenbereichs des Dachs oder der Wand, der im Wesentlichen den Abmessungen des Fensters entspricht,
Vorsehen eines Markierungswerkzeugs (1) mit einem Fenstereingriffselement (3), das eine erste Fläche aufweist, die dazu eingerichtet ist, in den Fensterrahmen (11) einzugreifen, und
einem Markiererhalterungselement (5), das eine Winkelanzeigeeinrichtung (51) und einen Markierer (7) aufweist, wobei das Markiererhalterungselement (5) einen Markierarretierungsmechanismus (53) mit einer Längsachse (55) umfasst,
in dem das Fenstereingriffselement (3) und das Markiererhalterungselement (5) durch eine Schwenkverbindung (21) verschwenkbar verbunden sind, wodurch das Einstellen eines Winkels (α) zwischen einer durch die erste Fläche (31) des Fenstereingriffselements und die Längsachse (55) des Markiererarretierungsmechanismus (53) definierten Ebene zugelassen wird,
wobei die Winkelanzeigeeinrichtung (51) dazu ausgelegt ist, den Winkel (α) des Markiererarretierungsmechanismus (53) anzuzeigen, wenn das Markierungswerkzeug (1) am Fenster anliegt, und der Markierer (7) dazu ausgelegt ist, eine geplante Schneidestelle anzuzeigen,
wobei das Fenstereingriffselement (3) des Markierungswerkzeugs (1) mit mindestens einem Schenkel (31) versehen ist, der die erste Fläche vorsieht und dazu ausgelegt ist, im auf dem Dachfenster (10) montierten Zustand am Fensterrahmen (11) anzuliegen, und
wobei der mindestens eine Schenkel (31) des Fenstereingriffselements (3) im montierten Zustand lösbar am Fensterrahmen (11) befestigbar ist,
lösbar Befestigen des Markierungswerkzeugs (1) am Fenster, Platzieren des Fensters auf dem unbedeckten Abschnitt auf dem Außenbereich des Dachs oder der Wand, und wobei die Winkelanzeigeeinrichtung (51) dazu verwendet wird, zu gewährleisten, dass das Markiererhalterungselement einen festgelegten Winkel aufweist,
Markieren einer geplanten Schneidestelle mittels des Markierers (7) und
Vorbereiten einer Öffnung durch die Wand oder das Dach an der geplanten Schneidestelle.

2. Markierungswerkzeug (1) zur Verwendung in dem Verfahren nach Anspruch 1, Folgendes umfassend:
ein Fenstereingriffselement (3), das eine erste Fläche aufweist, die dazu eingerichtet ist, in den Fensterrahmen (11) einzugreifen, und
ein Markiererhalterungselement (5), das eine Winkelanzeigeeinrichtung (51) und einen Markierer (7) aufweist, wobei das Markiererhalterungselement (5) einen Markierarretierungsmechanismus (53) mit einer Längsachse (55) umfasst,
in dem das Fenstereingriffselement (3) und das Markiererhalterungselement (5) durch eine Schwenkverbindung (21) verschwenkbar verbunden sind, wodurch das Einstellen eines Winkels (α) zwischen einer durch die erste Fläche (31) des Fenstereingriffselements und die Längsachse (55) des Markiererarretierungsmechanismus (53) definierten Ebene zugelassen wird,
wobei die Winkelanzeigeeinrichtung (51) dazu ausgelegt ist, den Winkel (α) des Markiererarretierungsmechanismus (53) anzuzeigen, wenn das Markierungswerkzeug (1) am Fenster anliegt, und der Markierer (7) dazu ausgelegt ist, eine geplante Schneidestelle anzuzeigen,
wobei das Fenstereingriffselement (3) des Markierungswerkzeugs (1) mit mindestens einem Schenkel (31) versehen ist, der die erste Fläche vorsieht und dazu ausgelegt ist, im auf dem Dachfenster (10) montierten Zustand am Fensterrahmen (11) anzuliegen, und
wobei der mindestens eine Schenkel (31) des Fenstereingriffselements (3) im montierten Zustand lösbar am Fensterrahmen (11) befestigbar ist, wobei der mindestens eine Schenkel (31) des Fenstereingriffselements (3) des Markierungswerkzeugs (1) dazu ausgelegt ist, in eine Nut (13) im Fensterrahmen (11) des Dachfensters (10) eingesetzt zu werden, und wobei die lösbare Befestigung im montierten Zustand des Markierungswerkzeugs (1) durch den Reibschluss zwischen dem mindestens einen Schenkel (31) und der Nut (13) vorgesehen ist,
**dadurch gekennzeichnet,**
**dass** der Reibschluss mittels einer oder mehrerer elastischer Zungen (35) an dem mindestens einen Schenkel (31) des Fenstereingriffselements (3) vorgesehen ist, um die Rückhaltung des Markierungswerkzeugs (1) am Dachfenster (10) im montierten Zustand zu vergrößern.

3. Markierungswerkzeug nach Anspruch 2, wobei mindestens einige der elastischen Zunge oder elastischen Zungen (35) mit einem Vorsprung (36) versehen ist/sind.

4. Markierungswerkzeug nach einem der Ansprüche 2-3, wobei das Fenstereingriffselement (3) mit zwei Schenkeln (31, 32) versehen ist, die einen rechten Winkel zueinander ausbilden.

5. Markierungswerkzeug nach einem der Ansprüche 2-4, wobei der mindestens eine Schenkel (31, 32) mit einem inneren, schmalen Abschnitt (34a), der die erste Fläche umfasst, einem entgegengesetzten äußeren, breiten Abschnitt (34b) und einem geneigten Zwischenabschnitt (34c) versehen ist.

6. Markierungswerkzeug nach einem der Ansprüche 2-5, wobei die maximale Breite des mindestens einen Schenkels (31, 32) jeweils etwa 10 bis 15 mm, vorzugsweise 12 bis 13 mm, beträgt.

7. Markierungswerkzeug nach einem der Ansprüche 2-6, wobei die maximale Stärke des mindestens einen Schenkels (31, 32) jeweils etwa 7 bis 13 mm, vorzugsweise 9 bis 11 mm, beträgt.

8. Markierungswerkzeug nach einem der Ansprüche 2-7, wobei das Fenstereingriffselement (3) einen Giebelabschnitt (37) umfasst, der Teil der Schwenkverbindung (21) zum Markiererhalterungselement (5) ist, wobei der Giebelabschnitt (37) optional aus dem Außenumfang des mindestens einen Schenkels (31, 32) nach außen vorsteht.

9. Markierungswerkzeug nach Anspruch 8, wobei das Markiererhalterungselement (5) einen Laschenabschnitt (57) umfasst, der dazu ausgelegt ist, in dem Giebelabschnitt (37) des Fenstereingriffselements (3) aufgenommen zu werden, um Teil der Schwenkverbindung (21) zu werden.

10. Markierungswerkzeug nach Anspruch 4 und 8 oder 9, wobei sich die Schwenkverbindung (21) außerhalb der Schnittstelle der Außenumfänge der zwei Schenkel (31, 32) des Fenstereingriffselements (3) befindet, vorzugsweise im Bereich von 5 bis 13 mm, weiter bevorzugt im Bereich von 7 bis 11 mm.

11. Markierungswerkzeug nach Anspruch 2, wobei die Winkelanzeigeeinrichtung (51) des Markiererhalterungselements (5) eine Wasserwaage, einen Winkelmesser (61) und/oder eine Einrichtung zum Einbau eines Lots (62) umfasst.

12. Markierungswerkzeug nach Anspruch 11, wobei die Winkelanzeigeeinrichtung (51) als getrenntes Element vorgesehen ist, das in einer Aussparung (52) aufgenommen ist, die in einer aufrechten Wand (56) eines Hauptabschnitts (54) des Markiererhalterungselements (5) vorgesehen ist.

13. Markierungswerkzeug nach einem der Ansprüche 2-12, wobei der Markiererarretierungsmechanismus (53) als Schnappschloss oder formschlüssiger Arretierungsmechanismus o. ä. angeordnet ist.

14. Markierungswerkzeug nach einem der Ansprüche 2-13, wobei die Markierungsvorrichtung (7) ein Stift, ein Durchstechobjekt, ein Laserpointer, ein Teleskopzeigestab oder ein Bohrer ist.

15. Markierungswerkzeug nach einem der Ansprüche 2-14, wobei die Schwenkverbindung (21) zwischen dem Fenstereingriffselement und dem Markiererhalterungselement ein Scharnier, ein Kugelgelenk, ein Dreh- oder ein Schwenkgelenk ist.

16. Markierungswerkzeug nach einem der Ansprüche 2-15, wobei das Fenstereingriffselement (3) des Markierungswerkzeugs (1) einen Auslegerarm (33) umfasst, der einen Abstand zwischen der ersten Fläche (31) des Fenstereingriffselements (3) und der Schwenkverbindung (21) zwischen dem Fenstereingriffselement (3) und dem Markiererhalterungselement (5) einführt.

17. Markierungswerkzeug nach Anspruch 16, wobei der Auslegerarm (33) derart vorgesehen ist, dass er sich in einem rechten Winkel oder einem alternativen Winkel zur ersten Fläche erstreckt, wobei der Winkel fest oder variabel sein kann.

## Revendications

1. Procédé pour réaliser une ouverture dans un mur intérieur d'une structure de bâtiment pour une garniture intérieure (94 ; 96, 98) destinée à être raccordée à un cadre de fenêtre (11) d'une fenêtre de toit (10), comprenant les étapes de procédure suivantes :
préparer une partie découverte d'un extérieur du toit ou du mur correspondant essentiellement aux dimensions de la fenêtre,
prendre un outil de marquage (1) comportant
un élément pour accouplement avec la fenêtre (3) comportant une première surface apte à être accolée au cadre de fenêtre (11), et
un élément de support de dispositif de marquage (5) comportant un moyen d'indication d'angle (51) et un dispositif de marquage (7), l'élément de support de dispositif de marquage (5) comprenant un mécanisme de blocage de dispositif de marquage (53) ayant un axe longitudinal (55),
dans lequel l'élément pour accouplement avec la fenêtre (3) et l'élément de support de dispositif de marquage (5) sont raccordés de manière pivotante par le biais d'un raccord pivotant (21) permettant un ajustement d'un angle (α) entre un plan défini par la première surface (31) de l'élément pour accouplement avec la fenêtre et l'axe longitudinal (55) du mécanisme de blocage de dispositif de marquage (53),
le moyen d'indication d'angle (51) étant conçu pour indiquer l'angle (a) de l'axe du mécanisme de blocage de dispositif de marquage (53) lorsque l'outil de marquage (1) est accolé à la fenêtre, et le dispositif de marquage (7) étant conçu pour indiquer un emplacement de découpe prévu,
l'élément pour accouplement avec la fenêtre (3) de l'outil de marquage (1) étant pourvu d'au moins une branche (31) définissant ladite première surface et conçue pour être accolée au cadre de fenêtre (11) dans un état posé sur la fenêtre de toit (10), et
ladite au moins une branche (31) de l'élément pour accouplement avec la fenêtre (3) pouvant être attachée de manière amovible au cadre de fenêtre (11) dans ledit état posé,
attacher de manière amovible l'outil de marquage (1) contre la fenêtre,
placer la fenêtre sur la partie découverte à l'extérieur du toit ou du mur et le moyen d'indication d'angle (51) étant utilisé pour s'assurer que l'élément de support de dispositif de marquage est disposé à un angle prédéterminé,
marquer un emplacement de découpe prévu au moyen du dispositif de marquage (7) et
préparer une ouverture à travers le mur ou le toit au niveau de l'emplacement de découpe prévu.

2. Outil de marquage (1) destiné à une utilisation dans le procédé de la revendication 1, comprenant :
un élément pour accouplement avec la fenêtre (3) comportant une première surface apte à être accolée au cadre de fenêtre (11), et
un élément de support de dispositif de marquage (5) comportant un moyen d'indication d'angle (51) et un dispositif de marquage (7), l'élément de support de dispositif de marquage (5) comprenant un mécanisme de blocage de dispositif de marquage (53) ayant un axe longitudinal (55),
dans lequel l'élément pour accouplement avec la fenêtre (3) et l'élément de support de dispositif de marquage (5) sont raccordés de manière pivotante par le biais d'un raccord pivotant (21) permettant un ajustement d'un angle (α) entre un plan défini par la première surface (31) de l'élément pour accouplement avec la fenêtre et l'axe longitudinal (55) du mécanisme de blocage de dispositif de marquage (53),
le moyen d'indication d'angle (51) étant conçu pour indiquer l'angle (a) de l'axe du mécanisme de blocage de dispositif de marquage (53) lorsque l'outil de marquage (1) est accolé à la fenêtre, et le dispositif de marquage (7) étant conçu pour indiquer un emplacement de découpe prévu,
dans lequel l'élément pour accouplement avec la fenêtre (3) de l'outil de marquage (1) est pourvu d'au moins une branche (31) définissant ladite première surface et conçue pour être accolée au cadre de fenêtre (11) dans un état posé sur la fenêtre de toit (10), et
ladite au moins une branche (31) de l'élément pour accouplement avec la fenêtre (3) pouvant être attachée de manière amovible au cadre de fenêtre (11) dans ledit état posé, ladite au moins une branche (31) de l'élément pour accouplement avec la fenêtre (3) de l'outil de marquage (1) étant conçue pour être introduite dans une rainure (13) du cadre de fenêtre (11) de la fenêtre de toit (10), et dans lequel le raccordement de manière amovible est mis en œuvre par accouplement par friction entre ladite au moins une branche (31) et la rainure (13) dans l'état posé de l'outil de marquage (1),
**caractérisé en ce que**
l'accouplement par friction est mis en œuvre au moyen d'une ou de plusieurs languettes élastiques (35) sur ladite au moins une branche (31) de l'élément pour accouplement avec la fenêtre (3) pour augmenter la retenue de l'outil de marquage (1) à la fenêtre de toit (10) dans l'état posé.

3. Outil de marquage selon la revendication 2, dans lequel ladite ou au moins certaines desdites languette(s) élastique(s) (35) est/sont pourvue(s) d'une saillie (36).

4. Outil de marquage selon l'une quelconque des revendications 2 et 3, dans lequel l'élément pour accouplement avec la fenêtre (3) est pourvu de deux branches (31, 32), formant un angle droit l'une par rapport à l'autre.

5. Outil de marquage selon l'une quelconque des revendications 2 à 4, dans lequel ladite au moins une branche (31, 32) est pourvue d'une section intérieure étroite (34a) comprenant la première surface, d'une section extérieure large opposée (34b) et d'une section intermédiaire inclinée (34c).

6. Outil de marquage selon l'une quelconque des revendications 2 à 5, dans lequel la largeur maximale de chacune desdites branches (31, 32) est d'approximativement 10 à 15 mm, de préférence 12 à 13 mm.

7. Outil de marquage selon l'une quelconque des revendications 2 à 6, dans lequel l'épaisseur maximale de chacune desdites branches (31, 32) est d'approximativement 7 à 13 mm, de préférence 9 à 11 mm.

8. Outil de marquage selon l'une quelconque des revendications 2 à 7, dans lequel l'élément pour accouplement avec la fenêtre (3) comprend une partie chape (37) constituant une partie du raccord pivotant (21) avec l'élément de support de dispositif de marquage (5), ladite partie chape (37) faisant éventuellement saillie à l'extérieur du périmètre extérieur de ladite au moins une branche (31, 32).

9. Outil de marquage selon la revendication 8, dans lequel l'élément de support de dispositif de marquage (5) comprend une partie oreille (57) conçue pour être reçue dans la partie chape (37) de l'élément pour accouplement avec la fenêtre (3) de façon à constituer une partie du raccord pivotant (21).

10. Outil de marquage selon les revendications 4 et 8 ou 9, dans lequel le raccord pivotant (21) est situé à l'extérieur de l'intersection des périmètres extérieurs des deux branches (31, 32) de l'élément pour accouplement avec la fenêtre (3), de préférence de 5 à 13 mm, plus préférablement de 7 à 11 mm.

11. Outil de marquage selon la revendication 2, dans lequel le moyen d'indication d'angle (51) de l'élément de support de dispositif de marquage (5) comprend un niveau à bulle, un rapporteur (61) et/ou un moyen pour installer un fil à plomb (62).

12. Outil de marquage selon la revendication 11, dans lequel le moyen d'indication d'angle (51) est un élément distinct reçu dans une cavité (52) formée à l'intérieur d'une paroi verticale (56) d'une partie principale (54) de l'élément de support de dispositif de marquage (5).

13. Outil de marquage selon l'une quelconque des revendications 2 à 12, dans lequel le mécanisme de blocage de dispositif de marquage (53) est réalisé sous la forme d'un mécanisme de blocage à emboîtement-pression ou à complémentarité de forme ou similaire.

14. Outil de marquage selon l'une quelconque des revendications 2 à 13, dans lequel le dispositif de marquage (7) est un stylo, un objet perforant, un pointeur laser, un pointeur télescopique ou un foret.

15. Outil de marquage selon l'une quelconque des revendications 2 à 14, dans lequel le raccord pivotant (21) entre l'élément pour accouplement avec la fenêtre et l'élément de support de dispositif de marquage est une charnière, une rotule, une articulation ou un raccord tournant.

16. Outil de marquage selon l'une quelconque des revendications 2 à 15, dans lequel l'élément pour accouplement avec la fenêtre (3) de l'outil de marquage (1) comprend un bras de prolongement (33), qui introduit une distance entre la première surface (31) de l'élément pour accouplement avec la fenêtre (3) et le raccord pivotant (21) entre l'élément pour accouplement avec la fenêtre (3) et l'élément de support de dispositif de marquage (5).

17. Outil de marquage selon la revendication 16, dans lequel le bras de prolongement (33) est mis en place de telle sorte qu'il s'étende à angle droit ou un autre angle par rapport à la première surface, l'angle pouvant être fixe ou variable.
